# EUROPEAN PATENT SPECIFICATION

(11) **EP 3 871 922 B1**
(45) Date of publication and mention of the grant of the patent: **22.07.2026**
(21) Application number: 21156275.6
(22) Date of filing: 10.02.2021
(51) Int. Cl.: B60N 2/28

(54) **BUFFER SUPPORTING LEG AND CHILD SAFETY SEAT ASSEMBLY THEREWITH**
PUFFERSTÜTZBEIN UND KINDERSICHERHEITSSITZANORDNUNG DAMIT
PIED DE SUPPORT DE TAMPON ET ENSEMBLE SIÈGE DE SÉCURITÉ POUR ENFANT CORRESPONDANT

(30) Priority: 28.02.2020 CN 202020235839 U
(43) Date of publication of application: 01.09.2021
(73) Proprietor: Wonderland Switzerland AG, 6312 Steinhausen (CH)
(72) Inventor: CUI, Zongwang, Dongguan, Guangdong, 523648 (CN)
(74) Representative: Hoffmann Eitle

(56) References cited:
- DE-A1- 102012 100 072

## Description

### Field of the Invention

The present invention relates to a buffer supporting leg and a child safety seat assembly therewith.

### Background of the Invention

A child safety seat is fixed on a car seat for a child to ride and can restrain the child by restraint equipment to protect the child especially when a car accident happens. When the car crashes or decelerates, the child safety seat might slip, roll or fall due to an inertia effect. In view of this, a supporting leg with supporting function is installed on the child safety seat. But when the car crashes violently or decelerates suddenly, the supporting leg on the child safety seat will violently collide with a backrest portion behind a front seat of the car or a panel portion in front of the front seat of the car due to the inertia effect, so that a large impact force generated by the collision will directly act on the supporting leg. However, since the existing supporting leg only has the supporting function and does not have any buffering function, the large impact force will be directly transmitted from the supporting leg to the child safety seat, which affects the safety and comfort of the child.

DE 10 2012 100072 A1 discloses an adjustable support structure comprising a housing coupled with an underside of a child safety seat, a tube assembly connected with the housing, first and second detents and a release button. The tube assembly includes a first tube segment and a second tube segment telescopically connected together, and a base at a lowermost end of the tube assembly. The first detent blocks retraction of the first tube segment into the second segment, when the first tube segment is deployed at a desired position. The second detent blocks retraction of the second tube segment into the housing, when the second tube segment is deployed at a desired position. The release button is connected with the first detent and is operable to unlock the first detent to permit retraction of the first tube segment into the second tube segment. In this structure, a retracting movement of the first tube segment into the second tube segment drives unlocking of the second detent to permit retraction of the second tube segment into the housing.

Therefore, it is necessary to develop a supporting leg with the buffering function for the child safety seat to solve the above-mentioned problem.

### Summary of the Invention

This is mind, the present invention aims at providing a buffer supporting leg and a child safety seat assembly therewith which can effectively prevent damage to children.

This is achieved by a buffer supporting leg and a child safety seat assembly according to the independent claims. The dependent claims pertain to corresponding further developments and improvements.

As will be seen more clearly from the detail description following below, the claimed buffer supporting leg is for supporting and buffering a child safety seat and includes a leg potion and a buffering component. An upper end of the leg potion is connected to a base of the child safety seat. The buffering component is installed on the upper end of the leg portion and for absorbing impact applied to the child safety seat. The buffering component is a resilient structure.

According to the present invention, the buffering component is a thermoplastic polyurethane elastomer structure or rubber structure.

According to an embodiment of the present invention, the buffering component is fixedly connected to the leg portion.

According to an embodiment of the present invention, the leg potion is a telescopic structure.

According to an embodiment of the present invention, the leg potion includes a first sleeve and a second sleeve sleeved with each other in a slidable manner to be located in different relative positions, so as to form the telescopic structure.

According to an embodiment of the present invention, the leg potion further includes a locking structure for locking the first sleeve and the second sleeve so as to fix the first sleeve with the second sleeve or for releasing the first sleeve and the second sleeve so as to adjust a total length of the leg portion by relative sliding movement of the first sleeve and the second sleeve.

According to an embodiment of the present invention, the buffer supporting leg further includes an information device disposed on the leg portion for presenting at least two kinds of information. The information device can present the information with sound messages, light messages, visible messages, or combination thereof. The information device can clearly inform a user of a contact degree between the leg portion and a floor of the vehicle by presenting different kinds of information, so that the user can be aware of whether the leg portion contacts the floor of the vehicle completely, so as to achieve rapid installation of the buffer supporting leg.

According to an embodiment of the present invention, the information device includes a display window for displaying the at least two kinds of information.

According to an embodiment of the present invention, the display window displays the at least two kinds of information with different color patterns.

Furthermore, the claimed child safety seat assembly is installed in a vehicle and includes a child safety seat, and the buffer supporting leg. The buffering component of the buffer supporting leg abuts against a backrest portion behind a front seat of the vehicle or a panel portion in front of the front seat of the vehicle, and a lower end of the leg portion abuts against a floor of the vehicle.

According to an embodiment of the present invention, the child safety seat includes a base, and a frame connected to the base and connected to the upper end of the leg potion.

According to an embodiment of the present invention, the child safety seat further includes a traverse rod disposed on the frame and fixedly connected to the upper end of the leg potion.

According to an embodiment of the present invention, the child safety seat further includes a connecting component protruding from the base and connected to the leg potion, so as to prevent the child safety seat from turning over and to enhance a supporting effect of the buffer supporting leg.

In summary, the child safety seat assembly includes the buffer supporting leg. The buffering component is installed on and protrudes from the upper end of the leg portion for absorbing the impact force. The lower end of the leg portion can abut against the floor of the vehicle, and the upper end of the buffer supporting leg can abut against the backrest portion behind the front seat of the vehicle or the panel portion in front of the front seat of the vehicle, so as to bridge the child safety seat with the vehicle. When the vehicle crashes violently or decelerates suddenly, the upper end of the buffer supporting leg hits the backrest portion behind the front seat of the vehicle or the panel portion in front of the front seat of the vehicle and the lower end of the leg portion abuts against the floor of the vehicle, due to the inertia effect, so that the large impact force generated by collision will directly act on the upper end of the leg portion. The buffering component installed on the upper end of the leg portion can absorb the impact force so as to effectively reduce the impact force transmitted from the upper end of the leg portion to the child safety seat, which provides the buffering function and effectively protects the child sitting on the child safety seat. The buffering component of the buffer supporting leg can provide the enhanced buffering effect for the child safety seat assembly, and the buffer supporting leg of the present invention has simple and practical structure, which can be widely used.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a structural diagram of a child safety seat assembly according to an embodiment of the present invention,
FIG. 2 is a diagram illustrating connection of a buffer supporting leg and a child safety seat according to the embodiment of the present invention, and
FIG. 3 is a structural diagram of the buffer supporting leg according to the embodiment of the present invention.

### Detailed Description

In order to illustrate technical specifications and structural features as well as achieved purposes and effects of the present invention, relevant embodiments and figures are described as follows.

In the following detailed description of the preferred embodiments, reference is made to the accompanying drawings which form a part hereof, and in which is shown by way of illustration specific embodiments in which the invention may be practiced. In this regard, directional terminology, such as "top," "bottom," "front," "back," etc., is used with reference to the orientation of the Figure(s) being described. The members of the present invention can be positioned in a number of different orientations. As such, the directional terminology is used for purposes of illustration and is in no way limiting. Accordingly, the drawings and descriptions will be regarded as illustrative in nature and not as restrictive.

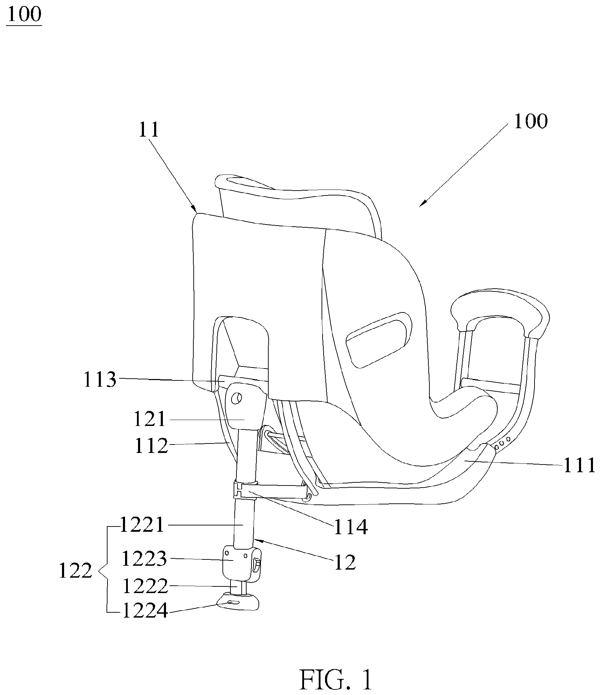

Please refer to FIG. 1. FIG. 1 is a structural diagram of a child safety seat assembly 100 according to an embodiment of the present invention. The child safety seat assembly 100 is installed in a vehicle, and the child safety seat assembly 100 includes a child safety seat 11 and a buffer supporting leg 12 for providing supporting and buffering functions for the child safety seat 11. The buffer supporting leg 12 includes a leg potion 122 and a buffering component 121 installed on the leg portion 122. The child safety seat assembly 100 can be installed on a front seat or a rear seat of the vehicle according a user's demand. Therefore, the buffering component 121 of the buffer supporting leg 12 can abut against a backrest portion behind the front seat of the vehicle or a panel portion in front of the front seat of the vehicle, and a lower end of the leg portion 122 can abut against a floor of the vehicle, so as to bridge the child safety seat 11 with the vehicle. When the vehicle crashes violently or decelerates suddenly, the buffer supporting leg 12 hits the backrest portion behind the front seat of the vehicle or the panel portion in front of the front seat of the vehicle due to the inertia effect, so that a large impact force generated by collision will directly act on an upper end of the leg portion 122. The buffering component 121 installed on the upper end of the leg portion 122 can absorb the impact force so as to effectively reduce the impact force transmitted from the upper end of the leg portion 122 to the child safety seat 11, which provides the buffering function and effectively protects a child sitting on the child safety seat 11.

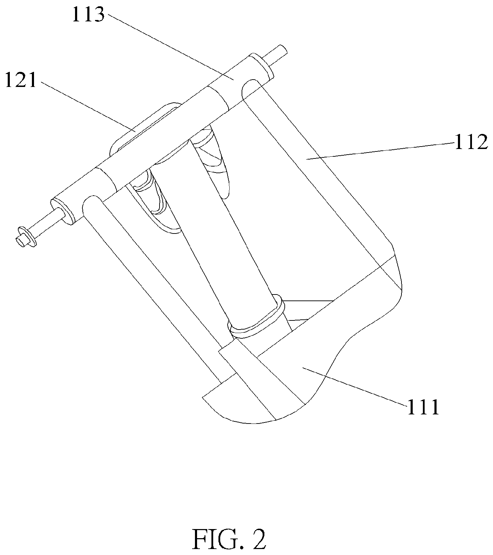

Please refer to FIG. 1 and FIG. 2. FIG. 2 is a diagram illustrating connection of the buffer supporting leg 12 and the child safety seat 11 according to the embodiment of the present invention. The child safety seat 11 includes a base 111, and a frame 112 connected to the base 111 and connected to the upper end of the leg potion 122. The child safety seat 11 further includes a traverse rod 113 disposed on the frame 112 and fixedly connected to the upper end of the leg potion 122, so as to fixedly connect the frame 112 with the leg portion 122. Specially, the traverse rod 113 can be fixedly connected to the upper end of the leg potion 122 by welding. In order to prevent the child safety seat 11 from turning over and to enhance the supporting effect of the buffer supporting leg 12, the child safety seat 11 further includes a connecting component 114 protruding from the base 111 and connected to the leg potion 122.

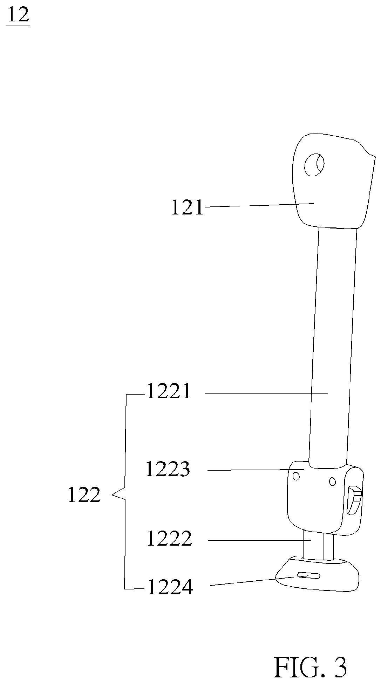

Please refer to FIG. 1 to FIG. 3. FIG. 3 is a structural diagram of the buffer supporting leg 12 according to the embodiment of the present invention. The buffer supporting leg 12 includes the leg potion 122 connected to the child safety seat 11. The buffering component 121 is installed on and protrudes from the upper end of the leg portion 122 for absorbing the impact force. The lower end of the leg portion 122 can abut against the floor of the vehicle. When the vehicle crashes violently or decelerates suddenly, the upper end of the buffer supporting leg 12 hits the backrest portion behind the front seat of the vehicle or the panel portion in front of the front seat of the vehicle and the lower end of the leg portion 122 abuts against the floor of the vehicle, due to the inertia effect, so that the large impact force generated by collision will directly act on the upper end of the leg portion 122. The buffering component 121 installed on the upper end of the leg portion 122 can absorb the impact force so as to effectively reduce the impact force transmitted from the upper end of the leg portion 122 to the child safety seat 11, which provides the buffering function and effectively protects the child sitting on the child safety seat 11. The buffering component 121 of the buffer supporting leg 12 can provide the enhanced buffering effect for the child safety seat assembly 100, and the buffer supporting leg 12 of the present invention has simple and practical structure, which can be widely used.

According to the invention, the buffering component 121 is a thermoplastic polyurethane elastomer structure or rubber structure. For providing the enhanced buffering effect, the buffering component 121 is fixedly connected to the leg portion 122. Specifically, the buffering component 121 can be integrated with the leg portion 122.

The leg potion 122 can be a telescopic structure with an adjustable total length. As shown in FIG. 3, the leg potion 122 includes a first sleeve 1221 and a second sleeve 1222 sleeved with each other in a slidable manner to be located in different relative positions, so as to form the telescopic structure. For rapid adjustment of the total length of the leg potion 122, the leg potion 122 further includes a locking structure 1223 for locking the first sleeve 1221 and the second sleeve 1222 so as to fix the first sleeve 1221 with the second sleeve 1222, or for releasing the first sleeve 1221 and the second sleeve 1222 so as to allow the adjustment of the total length of the leg portion 122 by relative sliding movement of the first sleeve 1221 and the second sleeve 1222.

Preferably, as shown in FIG. 1 and FIG. 3, the buffer supporting leg 12 further includes an information device 1224 disposed on the leg portion 122 for presenting at least two kinds of information. Specially, the information device 1224 can present the information with sound messages, light messages, visible messages, or combination thereof. The information device 1224 can clearly inform the user of a contact degree between the leg portion 122 and the floor of the vehicle by presenting different kinds of information, so that the user can be aware of whether the leg portion 122 contacts the floor of the vehicle completely, so as to achieve rapid installation of the buffer supporting leg 12. The leg portion 122 and the floor of the vehicle need to be in full contact, so that the buffer supporting leg 12 can provide the better supporting and buffering functions for the child safety seat 11. The user can be aware of whether the lower end of the leg portion 122 contacts the floor of the vehicle completely by the information device 1224. For example, the information device 1224 can include a display window for displaying the information with the visible messages. The display window can display the different kinds of information with different color patterns. That is, the display window can display different color patterns for indicating a status of complete contact between the lower end of the leg portion 122 and the floor of the vehicle or a status of incomplete contact between the lower end of the leg portion 122 and the floor of the vehicle. For example, when the lower end of the leg portion 122 is in full contact with the floor of the vehicle, the display window appears green. When the lower end of the leg portion 122 is not in full contact with the floor of the vehicle, the display window appears red.

In summary, the child safety seat assembly 100 includes the buffer supporting leg 12. The buffering component 121 is installed on and protrudes from the upper end of the leg portion 122 for absorbing the impact force. The lower end of the leg portion 122 can abut against the floor of the vehicle, and the upper end of the buffer supporting leg 12 can abut against the backrest portion behind the front seat of the vehicle or the panel portion in front of the front seat of the vehicle, so as to bridge the child safety seat 11 with the vehicle. When the vehicle crashes violently or decelerates suddenly, the upper end of the buffer supporting leg 12 hits the backrest portion behind the front seat of the vehicle or the panel portion in front of the front seat of the vehicle and the lower end of the leg portion 122 abuts against the floor of the vehicle, due to the inertia effect, so that the large impact force generated by collision will directly act on the upper end of the leg portion 122. The buffering component 121 installed on the upper end of the leg portion 122 can absorb the impact force so as to effectively reduce the impact force transmitted from the upper end of the leg portion 122 to the child safety seat 11, which provides the buffering function and effectively protects the child sitting on the child safety seat 11. The buffering component 121 of the buffer supporting leg 12 can provide the enhanced buffering effect for the child safety seat assembly 100, and the buffer supporting leg 12 of the present invention has simple and practical structure, which can be widely used.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A buffer supporting leg (12) for supporting and buffering a child safety seat (11), the buffer supporting leg (12) comprising:
a leg potion (122), an upper end of the leg potion (122) being adapted to be connected to a base (111) of the child safety seat (11), and
a buffering component (121) installed on the upper end of the leg portion (122) and for absorbing impact applied to the child safety seat (11),
**characterized in that** the buffering component (121) is a thermoplastic polyurethane elastomer structure or rubber structure.

2. The buffer supporting leg (12) of claim 1, **characterized in that** the buffering component (121) is fixedly connected to the leg portion (122).

3. The buffer supporting leg (12) of claim 1 or 2, **characterized in that** the leg potion (122) is a telescopic structure.

4. The buffer supporting leg (12) of claim 3, **characterized in that** the leg potion (122) comprises a first sleeve (1221) and a second sleeve (1222) sleeved with each other in a slidable manner to be located in different relative positions, so as to form the telescopic structure.

5. The buffer supporting leg (12) of claim 4, **characterized in that** the leg potion (122) further comprises a locking structure (1223) for locking the first sleeve (1221) and the second sleeve (1222) so as to fix the first sleeve (1221) with the second sleeve (1222) or for releasing the first sleeve (1221) and the second sleeve (1222) so as to adjust a total length of the leg portion (122) by relative sliding movement of the first sleeve (1221) and the second sleeve (1222).

6. The buffer supporting leg (12) of any one of claims 1 to 5, **characterized by** an information device (1224) disposed on the leg portion (122) for presenting at least two kinds of information.

7. The buffer supporting leg (12) of claim 6, **characterized in that** the information device (1224) comprises a display window for displaying the at least two kinds of information.

8. The buffer supporting leg (12) of claim 7, **characterized in that** the display window displays the at least two kinds of information with different color patterns.

9. A child safety seat assembly (100) installed in a vehicle and comprising a child safety seat (11), and **characterized by** the buffer supporting leg (12) of any one of claims 1 to 8, the buffering component (121) of the buffer supporting leg (12) abutting against a backrest portion behind a front seat of the vehicle or a panel portion in front of the front seat of the vehicle, and a lower end of the leg portion (122) abutting against a floor of the vehicle.

10. The child safety seat assembly (100) of claim 9, **characterized in that** the child safety seat (11) comprises a base (111), and a frame (112) connected to the base (111) and connected to the upper end of the leg potion (122).

11. The child safety seat assembly (100) of claim 10, **characterized in that** the child safety seat (11) further comprises a traverse rod (113) disposed on the frame (112) and fixedly connected to the upper end of the leg potion (122).

12. The child safety seat assembly (100) of claim 10, **characterized in that** the child safety seat (11) further comprises a connecting component (114) protruding from the base (111) and connected to the leg potion (122).

## Patentansprüche

1. Pufferstützbein (12) zum Stützen und Puffern eines Kindersicherheitssitzes (11), wobei das Pufferstützbein (12) umfasst:
einen Beinabschnitt (122), wobei ein oberes Ende des Beinabschnitts (122) dazu angepasst ist, mit einer Basis (111) des Kindersicherheitssitzes (11) verbunden zu werden, und
eine Pufferkomponente (121), die auf dem oberen Ende des Beinabschnitts (122) installiert ist und zum Absorbieren eines auf den Kindersicherheitssitz (11) ausgeübten Aufpralls dient,
**dadurch gekennzeichnet, dass** die Pufferkomponente (121) eine Struktur aus thermoplastischem Polyurethan-Elastomer oder Gummistruktur ist.

2. Pufferstützbein (12) nach Anspruch 1, **dadurch gekennzeichnet, dass** die Pufferkomponente (121) fest mit dem Beinabschnitt (122) verbunden ist.

3. Pufferstützbein (12) nach Anspruch 1 oder 2, **dadurch gekennzeichnet, dass** der Beinabschnitt (122) eine Teleskopstruktur ist.

4. Pufferstützbein (12) nach Anspruch 3, **dadurch gekennzeichnet, dass** der Beinabschnitt (122) eine erste Hülse (1221) und eine zweite Hülse (1222) umfasst, die gleitbar ineinander geschoben sind, um in unterschiedlichen relativen Positionen angeordnet zu sein, so dass die Teleskopstruktur gebildet wird.

5. Pufferstützbein (12) nach Anspruch 4, **dadurch gekennzeichnet, dass** der Beinabschnitt (122) weiter eine Verriegelungsstruktur (1223) zum Verriegeln der ersten Hülse (1221) und der zweiten Hülse (1222), um die erste Hülse (1221) mit der zweiten Hülse (1222) zu fixieren, oder zum Freigeben der ersten Hülse (1221) und der zweiten Hülse (1222), um eine Gesamtlänge des Beinabschnitts (122) durch relative Gleitbewegung der ersten Hülse (1221) und der zweiten Hülse (1222) einzustellen, umfasst.

6. Pufferstützbein (12) nach einem der Ansprüche 1 bis 5, **gekennzeichnet durch** eine Informationsvorrichtung (1224), die zum Darbieten von mindestens zwei Arten von Informationen auf dem Beinabschnitt (122) angeordnet ist.

7. Pufferstützbein (12) nach Anspruch 6, **dadurch gekennzeichnet, dass** die Informationsvorrichtung (1224) ein Anzeigefenster zum Anzeigen der mindestens zwei Arten von Informationen umfasst.

8. Pufferstützbein (12) nach Anspruch 7, **dadurch gekennzeichnet, dass** das Anzeigefenster die mindestens zwei Arten von Informationen mit unterschiedlichen Farbmustern anzeigt.

9. Kindersicherheitssitzanordnung (100), die in einem Fahrzeug installiert ist und einen Kindersicherheitssitz (11) umfasst, **gekennzeichnet durch** das Pufferstützbein (12) nach einem der Ansprüche 1 bis 8, wobei die Pufferkomponente (121) des Pufferstützbeins (12) an einem Rückenlehnenabschnitt hinter einem Vordersitz des Fahrzeugs oder an einem Paneelabschnitt vor dem Vordersitz des Fahrzeugs anliegt, und wobei ein unteres Ende des Beinabschnitts (122) an einem Boden des Fahrzeugs anliegt.

10. Kindersicherheitssitzanordnung (100) nach Anspruch 9, **dadurch gekennzeichnet, dass** der Kindersicherheitssitz (11) eine Basis (111) und einen Rahmen (112) umfasst, der mit der Basis (111) verbunden ist und mit dem oberen Ende des Beinabschnitts (122) verbunden ist.

11. Kindersicherheitssitzanordnung (100) nach Anspruch 10, **dadurch gekennzeichnet, dass** der Kindersicherheitssitz (11) weiter eine Querstrebe (113) umfasst, die auf dem Rahmen (112) angeordnet und fest mit dem oberen Ende des Beinabschnitts (122) verbunden ist.

12. Kindersicherheitssitzanordnung (100) nach Anspruch 10, **dadurch gekennzeichnet, dass** der Kindersicherheitssitz (11) weiter eine Verbindungskomponente (114) umfasst, die von der Basis (111) vorsteht und mit dem Beinabschnitt (122) verbunden ist.

## Revendications

1. Pied de support de tampon (12) pour supporter et amortir un siège de sécurité pour enfant (11), le pied de support de tampon (12) comprenant :
une partie de pied (122), une extrémité supérieure de la partie de pied (122) étant adaptée pour être reliée à une base (111) du siège de sécurité pour enfant (11), et
un composant amortissant (121) installé sur l'extrémité supérieure de la partie de pied (122) et pour absorber un impact appliqué au siège de sécurité pour enfant (11),
**caractérisé en ce que** le composant amortissant (121) est une structure en élastomère de polyuréthane thermoplastique ou une structure en caoutchouc.

2. Pied de support de tampon (12) selon la revendication 1, **caractérisé en ce que** le composant amortissant (121) est relié de manière fixe à la partie de pied (122).

3. Pied de support de tampon (12) selon la revendication 1 ou la revendication 2, **caractérisé en ce que** la partie de pied (122) est une structure télescopique.

4. Pied de support de tampon (12) selon la revendication 3, **caractérisé en ce que** la partie de pied (122) comprend un premier manchon (1221) et un deuxième manchon (1222) emmanchés l'un avec l'autre de manière coulissante pour être situés dans différentes positions relatives, de manière à former la structure télescopique.

5. Pied de support de tampon (12) selon la revendication 4, **caractérisé en ce que** la partie de pied (122) comprend en outre une structure de verrouillage (1223) pour verrouiller le premier manchon (1221) et le deuxième manchon (1222) de manière à fixer le premier manchon (1221) avec le deuxième manchon (1222) ou à libérer le premier manchon (1221) et le deuxième manchon (1222) de manière à ajuster une longueur totale de la partie de pied (122) par mouvement de coulissement relatif du premier manchon (1221) et du deuxième manchon (1222).

6. Pied de support de tampon (12) selon l'une quelconque des revendications 1 à 5, **caractérisé par** un dispositif d'information (1224) disposé sur la partie de pied (122) pour présenter au moins deux types d'informations.

7. Pied de support de tampon (12) selon la revendication 6, **caractérisé en ce que** le dispositif d'information (1224) comprend une fenêtre d'affichage pour afficher les au moins deux types d'informations.

8. Pied de support de tampon (12) selon la revendication 7, **caractérisé en ce que** la fenêtre d'affichage affiche les au moins deux types d'informations avec différents motifs de couleur.

9. Ensemble siège de sécurité pour enfant (100) installé dans un véhicule et comprenant un siège de sécurité pour enfant (11), et **caractérisé par** le pied de support de tampon (12) selon l'une quelconque des revendications 1 à 8, le composant amortissant (121) du pied de support de tampon (12) venant en appui contre une partie de dossier derrière un siège avant du véhicule ou une partie de panneau devant le siège avant du véhicule, et une extrémité inférieure de la partie de pied (122) venant en appui contre un plancher du véhicule.

10. Ensemble siège de sécurité pour enfant (100) selon la revendication 9, **caractérisé en ce que** le siège de sécurité pour enfant (11) comprend une base (111), et un cadre (112) relié à la base (111) et relié à l'extrémité supérieure de la partie de pied (122).

11. Ensemble siège de sécurité pour enfant (100) selon la revendication 10, **caractérisé en ce que** le siège de sécurité pour enfant (11) comprend en outre une tige transversale (113) disposée sur le cadre (112) et reliée de manière fixe à l'extrémité supérieure de la partie de pied (122).

12. Ensemble siège de sécurité pour enfant (100) selon la revendication 10, **caractérisé en ce que** le siège de sécurité pour enfant (11) comprend en outre un composant de connexion (114) faisant saillie depuis la base (111) et relié à la partie de pied (122).
